# EUROPEAN PATENT APPLICATION

(11) **EP 4 393 687 A1**
(43) Date of publication of application: **03.07.2024**
(21) Application number: 22874542.8
(22) Date of filing: 01.09.2022
(51) Int. Cl.: B32B 1/00, B32B 7/023, B32B 17/10, B32B 27/42, B32B 27/40, B32B 27/30, C03C 27/12, C03B 23/03, C03C 21/00, C03C 3/076, C03C 3/097, C03C 3/085, C03C 3/091, B60J 1/00

(54) **LAMINATED GLASS FOR VEHICLES**

(30) Priority: 30.09.2021 CN 202111163509
(71) Applicant: Fuyao Glass Industry Group Co., Ltd., Fuqing, Fujian 350300 (CN)
(72) Inventor: LIN, Jun, Fuqing, Fujian 350300 (CN); WANG, Zhe, Fuqing, Fujian 350300 (CN); WANG, Li, Fuqing, Fujian 350300 (CN); CHEN, Bizhu, Fuqing, Fujian 350300 (CN)
(74) Representative: Petraz, Gilberto Luigi
(86) International application number: PCT/CN2022/116462
(87) International publication number: WO 2023/051151

(57) **Abstract**

A laminated glass for vehicle use is prepared from raw materials including a first glass plate, a second glass plate, and an interlayer material. The first glass plate and the second glass plate have different compositions. The difference between temperature Tp1 and temperature Tp2 is smaller than or equal to 50°C. The temperature Tp1 is defined as a sum of a transition point temperature Tg1 of the first glass plate and a first temperature compensation value Tb1. The temperature Tp2 is defined as a sum of a transition point temperature Tg2 of the second glass plate and a second temperature compensation value Tb2. The temperature Tp is defined according to the following general formula: Tp=Tg+Tb.

## Description

### CROSS-REFERENCE TO RELATED APPLICATIONS

This application claims priority to China Patent Application No. 2021111635094, filed on September 30, 2021, entitled "LAMINATED GLASS FOR VEHICLES", the content of which is hereby incorporated by reference in its entirety.

### TECHNICAL FIELD

The present application relates to the technical field of a laminated glass, in particular to a laminated glass for vehicle use.

### BACKGROUND

A laminated vehicle glass is asymmetric and commonly includes an inner glass, which is thinner, and an outer glass, which is thicker. This special laminated glass is different from conventional laminated glasses mainly in that the inner glass needs to be subjected to an additional chemical tempering process after it is bend-molded and before the inner and outer glasses are laminated together to form the laminated glass. Currently, the chemical tempering method for the inner glass is generally adopted from the chemical tempering method for the glass covers in the electronic display panels. However, for the inner glass made of certain materials, the following problems may occur in the process of bend-molding together with the outer glass or in the process of chemical tempering after the bend-molding:

1) The softening point of the inner glass does not match the softening point of the outer glass, resulting in difficulties in bend-molding the two glasses simultaneously. 2) Even if the two glasses are bend-molded simultaneously, it is difficult to achieve a perfect match in shape between the bent glasses, resulting in different sizes of gaps between the inner and outer glasses after the lamination process, and finally affecting the optical quality of the product. 3) As the deforming tendencies of the inner and outer glasses may be inconsistent, the bending degrees of the central regions of the thermally bend-molded glasses may be inconsistent, leading to delamination or wavy edges, which will make the laminated glass have cracks or optical defects.

### SUMMARY

In view of the above and according to various embodiments of the present application, a laminated glass for vehicle use is provided. The technical solutions are as follows.

A laminated glass for vehicle use is prepared from raw materials including a first glass plate, a second glass plate, and an interlayer material.

The first glass plate and the second glass plate have different compositions.

The difference between temperature Tp1 and temperature Tp2 is less than or equal to 50°C.

The temperature Tp1 is defined as a sum of a transition point temperature Tg1 of the first glass plate and a first temperature compensation value Tb1. The temperature Tp2 is defined as a sum of a transition point temperature Tg2 of the second glass plate and a second temperature compensation value Tb2. The temperature Tp is defined according to the following general formula: Tp=Tg+Tb.

The transition point temperature Tg is defined as a temperature at which viscosity of a glass is about 10^{13.4} poises.

The first temperature compensation value Tb1 and weight percentages of components of the first glass plate satisfy the following condition: Tb1 is approximately equal to 100×(3.5×SiO₂+6.5×Al₂O₃-5×(Na₂O+K₂O)-3×(CaO+MgO)-6×B₂O₃-2.5×(ZnO+P₂O₅));

the second temperature compensation value Tb2 and weight percentages of components of the second glass plate satisfy the following condition: Tb2 is approximately equal to 100×(3.5×SiO₂+6.5×Al₂O₃-5×(Na₂O+K₂O)-3×(CaO+MgO)-6×B₂O₃-2.5×(ZnO+P₂O₅));

wherein the weight percentage(s) of one or more of Al₂O₃, K₂O, CaO, MgO, B₂O₃, ZnO, or P₂O₅ can be zero in the first glass plate or the second glass plate.

In an embodiment, the thickness of the first glass plate is smaller than that of the second glass plate, and the composition of the first glass plate is a pre-determined composition.

In an embodiment, the weight percentage of Al₂O₃ in the second glass plate is about 8 wt% to about 16 wt%.

In an embodiment, the total weight percentage of alkaline earth metal compounds in the second glass plate is equal to or less than 5 wt%.

In an embodiment, the total weight percentage of alkaline metal compounds in the second glass plate is about 15 wt% to about 25 wt%.

In an embodiment, the composition of the second glass plate includes Na₂O, and Na₂O accounts for at least 60 wt% of the total amount of the alkali metal compounds in the second glass plate.

In an embodiment, the composition of the second glass plate includes ZnO and P₂O₅, the weight percentage of ZnO is about 2 wt% to about 6 wt%, and the weight percentage of P₂O₅ is 0 wt% to about 3 wt%.

In an embodiment, the second glass plate is mainly made of aluminosilicate.

In an embodiment, the first glass plate is mainly made of sodium calcium silicate, aluminosilicate, or borosilicate.

In an embodiment, the first glass plate is mainly made of sodium calcium silicate; the second glass plate is mainly made of aluminosilicate; the weight percentage of Al₂O₃ in the second glass plate is about 8 wt% to about 12 wt%; the total weight percentage of the alkali metal compounds in the second glass plate is about 20 wt% to about 25 wt%.

In an embodiment, the first glass plate is mainly made of aluminosilicate or borosilicate; the second glass plate is mainly made of aluminosilicate; the weight percentage of Al₂O₃ in the second glass plate is about 12 wt% to about 16 wt%; the total weight percentage of the alkali metal compounds in the second glass plate is about 15 wt% to about 20 wt%.

In an embodiment, the thickness of the first glass plate is larger than or equal to 2.1 mm.

In an embodiment, the first glass plate is a colorless glass, a colored glass, or a coated glass including a coated surface adjacent to the interlayer material.

In an embodiment, the thickness of the second glass plate is smaller than or equal to 1.1 mm.

In an embodiment, the second glass plate is capable of having ion-exchange.

In an embodiment, the second glass plate is a colorless glass with a visible light transmittance greater than or equal to 88%.

In an embodiment, the interlayer material is an organic polymer.

Details of one or more embodiments of the present application are set forth in the following description. The further features, objects, and advantages of the present application will become apparent from the specification and the claims thereof.

### DETAILED DESCRIPTION

The technical solutions in the embodiments of the present application will be clearly and completely described below. Apparently, the described embodiments are only some rather than all of embodiments of the present application. All other embodiments obtained by one of ordinary skill in the art on the basis of the embodiments in the present application without creative work shall fall within the scope of protection of the application.

Unless otherwise defined, all technical and scientific terms used herein have the same meaning as commonly understood by one of ordinary skill in the technical field of the present application. The terms used herein in the description of the present application are only for the purpose of describing specific embodiments, and are not intended to limit the present application.

### Terms

Unless otherwise stated or there is a contradiction, the terms or phrases used herein have the following meanings.

In the present application, the terms "and/or", "or/and", and "as well as/or", when used in a list of two or more associated items, mean that any one of the items can be selected, and any or all combinations of the items can be selected. The any or all combinations include the combination of any two of the listed items, the combination of any more of the listed items, or the combination of all of the listed items.

In the present application, the term "one or more" refers to any one, two, or more of the listed items, wherein the term "more" refers to two or more.

In the present application, the terms used herein such as "combination thereof, "any combination thereof, and "any combination manner thereof' includes all suitable combinations of any two or more of the listed items.

In the present application, the term "suitable" in "suitable combination manner", "suitable manner", "any suitable manner", etc. is determined as being capable of implementing the technical solution of the present application, solving the technical problem of the present application, and achieving the technical effect anticipated in the present application.

In the present application, the term "preferably" is only for describing the embodiments or examples with better effects, but should not be construed as limiting the scope of protection of the present application.

In the present application, an open-ended description for the technical features includes not only a close-ended technical solution consisting of the recited technical features, but also an open-ended technical solution including the recited technical features.

In the present application, when a numerical range is mentioned, unless otherwise specifically stated, the two endpoints of the numerical range are included.

In the present application, when an amount in percentage is mentioned, unless otherwise specifically stated, it refers to mass percentage for both a solid-liquid mixture and a solid-solid mixture, and refers to volume percentage for a liquid-liquid mixture.

In the present application, when a concentration in percentage is mentioned, unless otherwise specifically stated, it always refers to the final concentration, referring to the proportion of the added component in a system after adding that component.

In the present application, when a temperature parameter is mentioned, unless otherwise specifically stated, not only a thermostatic process but also a variation within a certain temperature interval is allowed. The thermostatic process allows for temperature fluctuations within the accuracy range of the instrument.

In the present application, when a weight percentage is mentioned, unless otherwise specifically stated, it refers to the weight percentage of a component in a composition. For example, when a weight percentage of Al₂O₃ being 8 wt% to 12 wt% in a second glass plate is mentioned, the weight percentage refers to the percentage of the weight of Al₂O₃ in the weight of the second glass plate.

In some embodiments of the present application, a laminated glass for vehicle use is provided. The raw materials for preparation of the laminated glass include a first glass plate, a second glass plate, and an interlayer material.

The first glass plate and the second glass plate have different compositions.

The difference between temperatures Tp1 and Tp2 is less than or equal to 50°C.

The difference between temperatures Tp1 and Tp2 is approximately less than or equal to 50°C.

The temperature Tp1 is defined as a sum of a transition point temperature Tg1 of the first glass plate and a first temperature compensation value Tb1. The temperature Tp2 is defined as a sum of a transition point temperature Tg2 of the second glass plate and a second temperature compensation value Tb2. The temperature Tp is defined according to the following general formula: Tp=Tg+Tb.

The transition point temperature Tg is defined as a temperature at which viscosity of a glass is about 10^{13.4} poises.

The first temperature compensation value Tb1 and weight percentages of the components of the first glass plate satisfy the following condition: Tb1 is approximately equal to 100×(3.5×SiO₂+6.5×Al₂O₃-5×(Na₂O+K₂O)-3×(CaO+MgO)-6×B₂O₃-2.5×(ZnO+P₂O₅)).

The second temperature compensation value Tb2 and weight percentages of the components of the second glass plate satisfy the following condition: Tb2 is approximately equal to 100×(3.5×SiO₂+6.5×Al₂O₃-5×(Na₂O+K₂O)-3×(CaO+MgO)-6×B₂O₃-2.5×(ZnO+P₂O₅)).

The weight percentage(s) of one or more of Al₂O₃, K₂O, CaO, MgO, B₂O₃, ZnO, or P₂O₅ can be zero in the first glass plate or the second glass plate.

Optionally, the thickness of the first glass plate is smaller than that of the second glass plate, and the composition of the first glass plate is pre-determined. For example, the first glass plate is an outer glass, and the second glass plate is an inner glass. Optionally, the thickness of the first glass plate is larger than or equal to 2.1 mm. Optionally, the thickness of the second glass plate is smaller than or equal to 1.1 mm. For example, the thickness of the first glass plate can be, but is not limited to, about 2.1 mm, about 2.3 mm, about 2.5 mm, about 2.6 mm, about 2.8 mm, about 3.0 mm, about 3.2 mm, about 3.5 mm, about 3.8 mm, about 4.0 mm, about 4.2 mm, about 4.5 mm, about 5.0 mm, or a greater value. The thickness of the second glass plate can be, but is not limited to, about 0.5 mm, about 0.7 mm, about 0.9 mm, about 1.1 mm, or other thicknesses in the range of about 0.5 mm to about 1.1 mm. The technical effects described in the present application can be achieved with different combinations of thicknesses.

In some cases, the composition and shape of the outer glass are predetermined for the reason that the outer glass significantly influences the color, appearance, visible light transmittance, infrared and ultraviolet transmittances, ink, and compatibility with bonding accessories in automotive glass assemblies, as well as the entire set of glass deep-processing equipment and process system from the raw glasses to the finished product, etc. Therefore, the first glass plate of the present application can be made of a predetermined material. Compared to the outer glass, the material of the inner glass can be adjusted more freely, and the production process for the inner glass can be more diverse, making composition adjustments more feasible. Thus the material of the inner glass can be appropriately adjusted to match the outer glass. In the present application, the material of the second glass plate can be adjusted according to the predetermined material of the first glass plate, such that the difference between molding temperatures of the two glasses is smaller than or equal to about 50 °C.

In the present application, the molding temperature (Tp) of a glass is defined as a sum of the glass transition temperature (Tg) of the glass and the temperature compensation value (Tb) for the glass. The calculating formula of Tb is obtained on the basis of effects of different oxide components in the glass on the viscosity-temperature curve in combination with data from practical examples. In the calculating formula of Tb, a positive coefficient of an oxide component (e.g., SiO₂, Al₂O₃) indicates that the introduction of this oxide component increases the high-temperature viscosity of the glass, thus increasing the molding temperature of the glass, and the greater the coefficient, the significant the effect of this oxide component on the viscosity. A negative coefficient of an oxide component indicates that the introduction of this oxide component decreases the high-temperature viscosity of the glass, thus decreasing the molding temperature of the glass, and the greater the coefficient, the significant the effect of this oxide component on the viscosity. Generally, Tg and Tb are varied depending on the composition of the glass, and by controlling both Tg and Tb, the molding temperature Tp can meet the above conditions.

It can be understood that Tg of a glass can also be measured according to a standard method, and is defined as a temperature at which the viscosity of the glass is about 10^{13.4} poises.

In the present application, the molding temperature Tp1 of the first glass plate can be a temperature between Tg1 and a softening point of the first glass plate, at which the glass exhibits an optimal viscosity suitable for thermal bending processing, with both a ductility that makes the bend-molding process possible, and a fluidity that is not too high (i.e., the glass not being too soft) to cause defects (e.g., sticking between glasses, dropping out from the mold, mold marks, embedding of impurity particles, etc.) that may commonly occur in a glass bending process. Likewise, the molding temperature Tp2 of the second glass plate can be a temperature between Tg2 and a softening point of the second glass plate.

By meeting the above conditions, the processing operability of simultaneously bend-molding the first glass plate and the second glass plate can be achieved. In addition, the match degree between profiles of the bend-molded first and second glass plates can be improved, so as to decrease the size of the gap between the first glass plate and the second glass plate, avoid apparent delamination at the central region and wavy edges, thereby improving optical performance of the laminated glass after the lamination process.

In an embodiment, in addition to the difference between the molding temperature Tp1 of the first glass plate and the molding temperature Tp2 of the second glass plate satisfying the above condition, the composition of the second glass plate also satisfies the following condition: the composition of the second glass plate includes Al₂O₃, at least one alkali metal compound, and at least one alkaline earth metal compound.

In some embodiments, the weight percentage of Al₂O₃ in the second glass plate is about 8 wt% to about 16 wt%.

In some embodiments, the total weight percentage of the alkali earth metal compound(s) in the second glass plate is equal to or less than 5 wt%.

In some embodiments, the total weight percentage of the alkali metal compound(s) in the second glass plate is about 15 wt % to about 25 wt%.

On the one hand, an alkali metal oxide is a component necessary for glass production and is generally introduced in forms of soda ash, feldspar, etc. as the raw materials for decreasing the melting temperature in the glass production. On the other hand, the alkali metal provides free cations necessary for ion-exchange in the chemical tempering process, e.g., exchange of Na⁺ in the glass with K⁺ in a salt bath.

In some embodiments, the composition of the second glass plate includes Na₂O, and Na₂O accounts for at least 60 wt% of the total amount of the alkali metal compound(s) in the second glass plate. The inclusion of such amount of Na₂O in the glass facilitates the rapid ion-exchange.

In some embodiments, the composition of the second glass plate includes ZnO and P₂O₅, the weight percentage of ZnO is about 2 wt% to about 6 wt% in the second glass plate, and P₂O₅ is 0 wt% to about 3 wt% in the second glass plate.

Optionally, the second glass plate is mainly made of aluminosilicate.

It can be understood that the second glass plate is capable of having ion-exchange.

It can be understood that the second glass plate is a colorless glass with a visible light transmittance greater than or equal to 88%.

The laminated glasses for vehicle use have large sizes, diversified types, and complex curved shapes, and require a great depth of chemically tempered stress layer. In order to increase productivity, a rapid ion-exchange is needed, aiming to achieve a desired maximum stress layer depth in a shortest possible exchange time. The rapid ion-exchange can further decrease the time the glass is immersed in the molten salt, reducing the amount of impurity ions exchanged from the glass into the salt bath, thereby increasing the service time of the molten salt and reducing the replacement frequency of molten salt. However, for inner glasses made of certain materials, the required stress layer depth cannot be achieved by a rapid ion-exchange, which results in high cost in terms of both the productivity and the frequency of molten salt replacement.

By satisfying the above conditions, the second glass plate can achieve sufficient high surface stress and stress layer depth in a short time in the chemical tempering process, exhibiting a rapid ion-exchange tempering effect, which can meet the requirements for large-scale and mass production of chemically tempered glass for vehicle use, increase the productivity, reduce the replacement frequency of molten salt to save costs, and achieve a process cost close to the cost of a conventional air quench tempering process. These facilitate the better application of chemically tempered glass in the automotive market at a low cost.

The sufficient high surface stress and stress layer depth refer to that the depth of the compressive stress layer of the glass plate after the ion-exchange is larger than or equal to 30 µm and the compressive stress is greater than or equal to 500 MPa.

In the present application, the ion-exchange is rapid. In some embodiments, the time of the ion-exchange tempering is shorter than or equal to 4 h. In some embodiments, the time of the ion-exchange tempering is shorter than or equal to 2 h.

Optionally, the first glass plate is mainly made of sodium calcium silicate, aluminosilicate, or borosilicate.

It can be understood that the first glass plate can be an annealed glass which has a low stress, or a pre-stressed glass which has been physically thermally tempered.

It can be understood that the first glass plate can be a colorless glass, a colored glass, or a coated glass including a coated surface adjacent to the interlayer material.

In some embodiments, the first glass plate is mainly made of sodium calcium silicate, the second glass plate is mainly made of aluminosilicate, the weight percentage of Al₂O₃ in the second glass plate is about 8 wt% to about 12 wt%, and the total weight percentage of the alkali metal compound(s) in the second glass plate is about 20 wt% to about 25 wt%.

In some embodiments, the first glass plate is mainly made of aluminosilicate or borosilicate, the second glass plate is mainly made of aluminosilicate, the weight percentage of Al₂O₃ in the second glass plate is about 12 wt% to about 16 wt%, and the total weight percentage of the alkali metal compound(s) in the second glass plate is about 15 wt% to about 20 wt%.

In some embodiments, the interlayer of the laminated glass for vehicle use can be a single layer or includes multiple layers, and can be made of the interlayer material.

Optionally, the interlayer material is an organic polymer. In some embodiments, the organic polymer can be pre-composited with a special functional layer.

Optionally, the organic polymer includes, but is not limited to, polyvinyl butyral (PVB), polyurethane (PU), polyethylene vinyl acetate (EVA), ethylene-methacrylate copolymer (SGP), etc. as a main component, which have excellent aging resistance, and sufficient adhesion to the glass surface.

In the present application, the empirical formula of the temperature compensation value Tb of the glass plate is obtained on the basis of effects of different oxide components in the glass on the viscosity-temperature curve in combination with data from practical examples, and the molding temperature Tp of the glass plate derived therefrom. By restricting the difference between molding temperatures Tp1 and Tp2 of the first and second glass plates, the processing operability of simultaneously bend-molding the first glass plate and the second glass plate can be achieved. In addition, the match degree between profiles of the bend-molded first and second glass plates can be improved, so as to decrease the size of the gap between the first glass plate and the second glass, avoid apparent delamination at the central region and wavy edges, thereby improving optical performance of the laminated glass after the lamination process.

The present application further provides a method for preparing the above-described laminated glass for vehicle use.

A method for preparing the laminated glass for vehicle use includes steps of:
bend-molding the first glass plate and the second glass plate at a preset temperature;
separating the bend-molded first and second glass plates, and chemical tempering the bend-molded second glass plate; and
sandwiching the interlayer material between the bend-molded first glass plate and the bend-molded and chemically tempered second glass plate, and heating and applying pressure to achieve the laminated glass.

It can be understood that the bend-molding the first glass plate and the second glass plate can further include a step of pre-treating the first glass plate and the second glass plate. The step of pre-treating includes: cutting and edging the first glass plate and the second glass plate into specific contours as required, and predetermining a dimensional difference between the stacked first and second glass plates on the basis of the bent shape and size of a final product such that edges of the two bent glass plates can be aligned with each other after the two glass plates are stacked.

Optionally, the bend-molding the first glass plate and the second glass plate at the preset temperature includes:
stacking the first glass plate and the second glass plate, with heat-resistant separating powder applied between stacking surfaces thereof, to obtain the stacked glass plates;
placing the stacked glass plates onto a mold and bend-molding the stacked glass plates at the preset temperature.

It can be understood that the process of bend-molding the stacked glass plates can be a process of thermally bending the glass plates due to their own weights to conform to the glass plates to the mold, or a process of pressing from both sides with a lower annular mold and an upper solid mold.

Optionally, the molding can be performed while uniformly and symmetrically heating the stacked glass plates from both sides thereof in a continuous furnace or a tunnel furnace at a preset furnace temperature. The molding method can be a gravity bending method in which the glass is bent by gravity, conforming to the profile of the mold, thereby forming the required shape, or a pressing method in which the stacked glass plates that are incompletely shaped by gravity are placed between a lower annular mold and an upper solid mold and then pressed to form the required shape. After the molding process, the stacked glass plates are slowly cooled to room temperature so as to be annealed to obtain the bend-molded and stacked glass plates.

Optionally, the preset temperature is the molding temperature of the first glass plate.

Optionally, the continuous furnace or the tunnel furnace includes one or more chambers. When a single chamber is included, the temperature of the chamber can be increased by heating to the preset temperature, which is the molding temperature of the first glass plate. When a plurality of chambers are included, the temperature of each of the chambers can be increased by heating such that the temperatures of the chambers are in gradient distribution, and the highest chamber temperature is the preset temperature, which is the molding temperature of the first glass plate.

Optionally, the heat-resistant separating powder is a material in form of power that does not react with the surface of the glass, including but not limited to diatomaceous earth or calcium carbonate. In an embodiment, the particle size of the diatomaceous earth is about 5 µm to about 15 µm.

The first glass plate and the second glass plate can be separated from each other after the bend-molding process due to the heat-resistant separating powder introduced therebetween. Thereafter, the bend-molded second glass plate can be subjected to the chemical tempering process.

Optionally, the chemical tempering process includes steps of preheating, ion-exchanging, cooling, and cleaning.

Specifically, the bend-molded second glass plate is placed and uniformly fixed into a chemical tempering frame of corresponding size. The frame with the glass plate is uniformly heated in a preheating chamber to a temperature approximate to the ion-exchange temperature (about 350 °C to 400 °C), and then the frame with the glass plate is immersed into a salt bath of molten KNO₃ to perform the ion-exchange. The temperature and the time of the ion-exchange are set such that the stress value and depth can meet the specific requirements. When the ion-exchange is finished, the frame with the glass plate is slowly lifted up to allow the liquid KNO₃ adhered thereto to fully drip off, and then the frame with the glass plate is placed into a cooling chamber for uniformly cooling to below about 100°C. After the cooling, the glass plate is immersed into deionized water to remove excess KNO₃. The chemically tempered second glass plate is paired with the corresponding first glass plate that was simultaneously bent with the second glass plate for a lamination process.

The lamination process includes sandwiching the interlayer material between the bend-molded first glass plate and the chemically tempered second glass plate, heating and applying pressure to prepare the laminated glass.

After a pre-pressurization (or vacuuming) and a high temperature and high pressure treatment, the two glasses and the polymer interlayer are tidily and uniformly bonded together to form the laminated glass for vehicle use.

In an embodiment, the structure of the laminated glass for vehicle use has a convex surface, and when mounted to the vehicle body, the convex surface faces outward, with the first glass plate located on the side facing outward and the second glass plate located on the side facing inward.

Optionally, the laminated glass for vehicle use can be a front or rear windshield, a sunroof glass, or a front or rear door glass of the vehicle.

In an embodiment, the preset temperature of the bend-molding is about 593 °C, and the preset ion-exchange temperature of the chemical tempering of the molded second glass plate is about 420 °C.

In an embodiment, the ion-exchange time is 2 h, which can satisfy the requirements for the stress value and depth of the glass.

The present application will be further described below with reference to specific examples and comparative examples. In the following specific examples, the raw materials involved are commercially available unless otherwise specifically stated, the instruments used are commercially available unless otherwise specifically stated, and the processes involved are common processes in the art unless otherwise specifically stated.

### Examples and comparative examples

The laminated glasses in various examples and comparative examples were prepared according to the compositions of glass plates shown in Table 1 and combinations of the first glass plate and the second glass plate shown in Table 2. The thickness of the first glass plate was 3.5 mm. The thickness of the second glass plate was 1.1 mm. The preparing method was as follows.
1) The first glass plate and the second glass plate were cut and edged to form a specific contour as required.

The first glass plate and the second glass plate were stacked with each other, with diatomaceous earth with a particle size of 5 µm to 15 µm applied between stacking surfaces thereof, to obtain stacked glass plates.

The stacked glass plates were placed onto a lower annular mold, which was then placed into a continuous furnace having a chamber. The temperature of the chamber was increased to about 593 °C. The stacked glass plates were heated uniformly and symmetrically from upper and lower sides, and pressed by an upper solid mold and the lower annular mold from upper and lower sides. After the molding was finished, the stacked glass plates were slowly cooled to room temperature for annealing, thereby obtaining bend-molded and stacked glass plates.

2) The bend-molded first and second glass plates were separated from each other. The bend-molded second glass plate was placed and uniformly fixed into a chemical tempering frame of corresponding size. The glass plate with the frame was uniformly heated in a preheating chamber, and then immersed into a salt bath of molten KNO₃ to perform the ion-exchange at a temperature of about 420 °C. After the stress value and depth met specific requirements, the glass plate with the frame was taken out, cooled, and washed.

3) An organic polymer film was sandwiched between the first glass plate and the chemically tempered second glass plate. After a pre-pressurization (or vacuuming) and a high temperature and high pressure treatment, the two glasses and the organic polymer film are tidily and uniformly bonded together to form the laminated glass for vehicle use. The obtained laminated glass was used as a front windshield for a sedan.

**Table 1**

| No. | Oxide components/wt% | | | | | | | | |
|---|---|---|---|---|---|---|---|---|---|
| | SiO₂ | Na₂O | K₂O | Al₂O₃ | B₂O₃ | CaO | MgO | ZnO | P₂O₅ |
| Sodium calcium silicate① | 72 | 14 | 0 | 0 | 0 | 9 | 5 | 0 | 0 |
| Aluminosilicate① | 61 | 15 | 6 | 8 | 0 | 2 | 2 | 4 | 2 |
| Aluminosilicate② | 58 | 16 | 5 | 10 | 0 | 1 | 1 | 6 | 3 |
| Aluminosilicate③ | 63 | 13 | 2 | 21 | 0 | 0 | 1 | 0 | 0 |
| Aluminosilicate④ | 58 | 15 | 3 | 14 | 0 | 0 | 2 | 5 | 3 |
| Aluminosilicate⑤ | 58 | 14 | 5 | 14 | 0 | 1 | 2 | 4 | 2 |
| Borosilicate① | 81 | 2 | 2 | 2 | 13 | 0 | 0 | 0 | 0 |

**Table 2**

| No. | First glass plate | Second glass plate | Tb2 of second glass plate | Molding temperature Tp2 of second glass plate | Tb1 of first glass plate | Molding temperature Tp1 of first glass plate |
|---|---|---|---|---|---|---|
| Example 1 | sodium calcium silicate ① | aluminosilicate ① | 133.5 | 604 | 140 | 593 |
| Example 2 | sodium calcium silicate ① | aluminosilicate ② | 134.5 | 605 | 140 | 593 |
| Example 3 | borosilicate① | aluminosilicate ④ | 178 | 653 | 198.5 | 670 |
| Example 4 | borosilicate① | aluminosilicate ⑤ | 175 | 648 | 198.5 | 670 |
| Comparative Example 5 | sodium calcium silicate ① | sodium calcium silicate ① | 140 | 593 | 140 | 593 |
| Comparative Example 6 | aluminosilicate ③ | aluminosilicate ③ | 279 | 750 | 279 | 750 |
| Comparative Example 7 | borosilicate① | aluminosilicate ③ | 279 | 750 | 198.5 | 670 |

The technical effects of above examples and comparative examples were evaluated according to a central gap and an edge gap between the molded first and second glass plates.

In addition, compared to the cover glass of the electronic display, the chemically tempered glass for the vehicle requires lower surface stress but higher stress layer depth. For the chemical tempering furnace for tempering vehicle glass, even with increased furnace size, the single loading capacity remains relatively low, which makes it necessary to obtain sufficient stress layer depth in as quickly as possible. Therefore, the technical effects of the above examples and comparative examples were further evaluated according to average ion-exchange rates in the first four hours of the ion-exchange of the second glass plates.

**Table 3**

| No. | Maximum central gap between the first and second glass plates after the bend-molding (mm) | Maximum edge gap between the first and second glass plates after the bend-molding (mm) | Average ion-exchange rate in the first four hours of the chemical tempering of the second glass plate (µm/h) |
|---|---|---|---|
| Example 1 | 0.5 | 0.8 | 15 |
| Example 2 | 0.3 | 0.5 | 17 |
| Example 3 | 0.2 | 0.4 | 19 |
| Example 4 | 0.4 | 0.7 | 17 |
| Comparative Example 5 | 0.8 | 1.0 | 2 |
| Comparative Example 6 | 0.8 | 0.8 | 8 |
| Comparative Example 7 | 8 | 12 | 8 |

From Table 3 it can be seen that in Examples 1 to 4, on the one hand, the central gap between the bend-molded first and second glass plates is small, there is no obvious delamination in the central region of the first and second glass plates, and the edge gap and waviness are small. This high conformity of the profiles of the two plates allows the final shape of the laminated glass to remain consistent with the stacked and thermally bend-molded glasses, which is beneficial to improving the overall optical performance of the product. On the other hand, the second glass plates in Examples 1 to 4 exhibit rapid ion-exchange tempering effects. Within the first four hours of the ion-exchange, the stress layer depth representing the average exchange rate is higher than or equal to 12 µm per hour. In some individual cases, in about 2 h of the ion-exchange, the stress layer depth can even reach 40 µm, which can meet the requirements for large-scale, mass production of the chemically tempered glass for vehicle use, and achieve a process cost close to the cost of a conventional air quench hardening process. These facilitate the better application of chemically tempered glass in the automotive market. In addition, the time the glass is immersed in the molten salt can be reduced, which reduces the amount of impurity ions exchanged from the glass into the salt bath, thereby increasing the service time of the molten salt, reducing the replacement frequency of molten salt, and saving the cost.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A laminated glass for vehicle use, prepared from raw materials comprising a first glass plate, a second glass plate, and an interlayer material, wherein
the first glass plate and the second glass plate have different compositions;
a difference between temperature Tp1 and temperature Tp2 is less than or equal to 50°C;
the temperature Tp1 is defined as a sum of a transition point temperature Tg1 of the first glass plate and a first temperature compensation value Tb1, the temperature Tp2 is defined as a sum of a transition point temperature Tg2 of the second glass plate and a second temperature compensation value Tb2, and the temperature Tp is defined according to the following general formula: Tp=Tg+Tb;
the transition point temperature Tg is defined as a temperature at which viscosity of a glass is about 10^{13.4} poises;
the first temperature compensation value Tb1 and weight percentages of components of the first glass plate satisfy the following condition: Tb1 is approximately equal to 100×(3.5×SiO₂+6.5×Al₂O₃-5×(Na₂O+K₂O)-3×(CaO+MgO)-6×B₂O₃-2.5×(ZnO+P₂O₅));
the second temperature compensation value Tb2 and weight percentages of components of the second glass plate satisfy the following condition: Tb2 is approximately equal to 100×(3.5×SiO₂+6.5×Al₂O₃-5×(Na₂O+K₂O)-3×(CaO+MgO)-6×B₂O₃-2.5×(ZnO+P₂O₅));
the weight percentage of one or more of Al₂O₃, K₂O, CaO, MgO, B₂O₃, ZnO, or P₂O₅ can be zero in the first glass plate or the second glass plate.

2. The laminated glass of claim 1, wherein a thickness of the first glass plate is smaller than that of the second glass plate, and the composition of the first glass plate is a pre-determined composition.

3. The laminated glass of any one of claims 1 to 2, wherein a weight percentage of Al₂O₃ in the second glass plate is about 8 wt% to about 16 wt%.

4. The laminated glass of any one of claims 1 to 3, wherein a total weight percentage of alkaline earth metal compounds in the second glass plate is equal to or less than 5 wt%.

5. The laminated glass of any one of claims 1 to 4, wherein a total weight percentage of alkaline metal compounds in the second glass plate is about 15 wt% to about 25 wt%.

6. The laminated glass of claim 5, wherein the composition of the second glass plate comprises Na₂O, and Na₂O accounts for at least 60 wt% of a total amount of the alkali metal compounds in the second glass plate.

7. The laminated glass of any one of claims 1 to 6, wherein the composition of the second glass plate comprises ZnO and P₂O₅, a weight percentage of ZnO is about 2 wt% to about 6 wt%, and a weight percentage of P₂O₅ is about 0 wt% to about 3 wt%.

8. The laminated glass of any one of claims 1 to 7, wherein the second glass plate is substantially made of aluminosilicate.

9. The laminated glass of any one of claims 1 to 8, wherein the first glass plate is substantially made of sodium calcium silicate, aluminosilicate, or borosilicate.

10. The laminated glass of any one of claims 1 to 9, wherein the first glass plate is substantially made of sodium calcium silicate, the second glass plate is substantially made of aluminosilicate, a weight percentage of Al₂O₃ in the second glass plate is about 8 wt% to about 12 wt%, and a total weight percentage of alkali metal compounds in the second glass plate is about 20 wt% to about 25 wt%.

11. The laminated glass of any one of claims 1 to 9, wherein the first glass plate is substantially made of aluminosilicate or borosilicate, the second glass plate is substantially made of aluminosilicate, a weight percentage of Al₂O₃ in the second glass plate is about 12 wt% to about 16 wt%, and a total weight percentage of alkali metal compounds in the second glass plate is about 15 wt% to about 20 wt%.

12. The laminated glass of any one of claims 1 to 11, wherein a thickness of the first glass plate is larger than or equal to 2.1 mm.

13. The laminated glass of any one of claims 1 to 12, wherein the first glass plate is a colorless glass, a colored glass, or a coated glass comprising a coated surface adjacent to the interlayer material.

14. The laminated glass of any one of claims 1 to 13, wherein a thickness of the second glass plate is smaller than or equal to 1.1 mm.

15. The laminated glass of any one of claims 1 to 14, wherein the second glass plate is capable of having ion-exchange.

16. The laminated glass of any one of claims 1 to 15, wherein the second glass plate is a colorless glass with a visible light transmittance greater than or equal to 88%.

17. The laminated glass of any one of claims 1 to 16, wherein the interlayer material is an organic polymer.
